**Europäisches Patentamt**

**European Patent Office**

**Office européen des brevets**

(19)

(11) Veröffentlichungsnummer : **0 371 235 B1**

(12)

# EUROPÄISCHE PATENTSCHRIFT

(45) Veröffentlichungstag der Patentschrift :
**23.09.92 Patentblatt 92/39**

(51) Int. Cl.$^5$ : **B23F 21/16,** // B23C5/22

(21) Anmeldenummer : **89118558.9**

(22) Anmeldetag : **06.10.89**

(54) Stollenwälzfräser.

<table>
<tr><td>

(30) Priorität : **28.10.88 DE 8813541 U**

(43) Veröffentlichungstag der Anmeldung :
**06.06.90 Patentblatt 90/23**

(45) Bekanntmachung des Hinweises auf die
Patenterteilung :
**23.09.92 Patentblatt 92/39**

(84) Benannte Vertragsstaaten :
**AT CH DE ES FR GB IT LI SE**

(56) Entgegenhaltungen :
**DE-B- 1 066 072**
**DE-C- 593 531**
**DE-U- 8 604 712**

</td><td>

(56) Entgegenhaltungen :
**FR-A- 1 455 182**
**FR-A- 2 502 999**
**GB-A- 1 241 950**
**US-A- 1 855 511**

(73) Patentinhaber : **Wälztechnik Saacke-Zorn GmbH & Co. K.G.**
**Eutinger Strasse 164**
**W-7530 Pforzheim-Eutingen (DE)**

(72) Erfinder : **Zorn, Walter, Ing. grad.**
**Unterer Wingertweg 152**
**W-7530 Pforzheim (DE)**

(74) Vertreter : **Hubbuch, Helmut, Dipl.-Ing et al**
**Westliche 29-31 Am Leopoldplatz**
**W-7530 Pforzheim (DE)**

</td></tr>
</table>

EP 0 371 235 B1

## Beschreibung

Die Erfindung bezieht sich auf einen Stollenwälzfräser zur Herstellung von Verzahnungen im Abwälzverfahren gemäß Oberbegriff von Patentanspruch 1.

Üblicherweise sind die Stollenwälzfräser mit in Quernuten eines zylindrischen Grundkörpers einsetzbaren kammartigen Schneidzahnstollen versehen, deren einzelne Zahnköpfe über dem Grundkörper eine schraublinienförmige Anordnungen ergeben, wobei die Schneidzahnstollen in den Quernuten durch Schraubspannmittel an den Stollenhaltestegen zwischen den Quernuten verspannt beidseits mittels Endringen im Grundkörper gehalten sind.

Nach dem die Beschreibung des nächstkommenden Standes der Technik darstellenden DE-GM 86 04 712 dienen hierbei als Spannmittel Madenschrauben, welche hier im spitzen Winkel gegen im Fußbereich der Zahnstollen eingelassene Taschen zur Verspannung derselben einschraubbar sind. Bei der spitzwinkligen Anordnung der Madenschrauben kommt man mit dem Einschraubschlüssel leicht in den Bereich der Zahnköpfe, was zu schwerer Bedienbarkeit führt mit zu schwachem Anzug oder bei zu starkem Anzug der Madenschrauben werden die Imbus-Vertiefungen wegen zu geringer Wandstärke leicht beschädigt und sind nicht mehr zu öffnen.

Ferner zeigt z.B. die DE-PS 593 531 durch Schrauben gehaltene Riegel oder Klammern zur Halterung der Schneidzahnstollen, welche den wechselnden hohen Schneidkräften standhalten müssen und sich nicht lockern dürfen, was in der Praxis nur schwer zu erreichen ist.

Die FR-PS 1 455 182 zeigt darüber hinaus winklig gegen die Brust der Schneidzahnstollen einschraubbare Spannschrauben; diese neigen jedoch zur Lockerung der in gleicher Richtung auf sie wirkenden wechselnden hohen Schneidkräften.

Daneben wird der Festsitz der Schneidzahnstollen in den Quernuten am Grundkörper zur Aufnahme der Zerspanungskräfte beispielsweise durch Schrumpfen, Kleben, Keilen oder Verstiften erreicht. Die Lösung bei der Demontage in die Einzelteile erfordert hohe Kraftaufwendungen und ist teilweise nur durch Zerstörung möglich. Hierbei erfolgt die Montage zum Wiedereinsatz, wenn überhaupt möglich, unter erheblichem Zeitaufwand und unter Einbuße der Genauigkeit. Früher bestand weniger die Forderung und Notwendigkeit, einen Stollenwälzfräser zu demontieren und wieder zu montieren. Der Fräser wurde nach jedem Einsatz so lange nachgeschärft, bis sein Endzustand erreicht war. In neuerer Zeit besteht die Forderung, die Wälzfräser, insbesondere deren Schneidezähne mit einer dünnen Hartschicht - Titan-Nitrid-Beschichtung - zu überziehen, was nur in demontierten Zustand bei völliger ÖlfreiheitSauberkeit - möglich ist.

Es ist nun Aufgabe der Erfindung einen Stollenwälzfräser zu schaffen, dessen Schneidzahnstollen einerseits präzise und fest verspannt sind, um bei hoher Genauigkeit die großen und wechselnden Zerspanungskräfte aufnehmen zu können und andererseits zum NachbeschichtenTIN-Beschichtung - nach dem Scharfschleifen an der Zahnbrust, die Schneidzahnstollen gut zu demontieren und danach wieder präzise neu zu montieren.

Zur Lösung dieser Aufgabe kennzeichnet sich der Stollenwälzfräser nach dem Oberbegriff des Anspruchs 1, dadurch, daß Imbusschrauben - beim Anzug einerseits mit einem Sektor des Unterrands ihres Schraubkopfes auf dem Taschenboden im Fußbereich eines Stollenrückens und andererseits mit ihrem Kopfumfang entlang einer Mantellinie der Frontseite des benachbarten Stollenfußes anliegen. Hierdurch werden die Schneidzahnstollen beidseitig gespannt und können bei den heute auftretenden hohen Schneiddrücken nicht mehr zum Vibrieren neigen. Infolge der vorzusehenden Schraubköpfe mit Imbus-Vertiefung verbleibt auch genügend Wandstärke für starken Schraubanzug.

Nach einem weiteren Gedanken der Erfindung sind bei in radialer Richtung angeordneten Stollenfrontseiten die Schraubenbolzen jeweils in ein parallel hierzu verlaufendes Sackloch im Grundkörper einschraubbar, wobei der Abstand zwischen Schraubenachse und Frontseite dem Schraubkopfradius entspricht. Hierdurch wird eine ungehinderte Entnahme und Eindrehen der Schrauben mit automatischen Drehwerkzeugen bei einstellbarem Drehmoment und guter Zugänglichkeit erreicht.

Eine bevorzugte Ausführungsform eines Stollenwälzfräsers gemäß der Erfindung ist beispielsweise in der Zeichnung schematisch dargestellt und nachfolgend beschrieben und zwar zeigen:

Figur 1 und 2 eine Gesamt- und Stirnansicht - stark verkleinert - eines Stollenwälzfräsers mit Teilschnitt,
Figur 3 den Querschnitt nach Linie III-III des Grundkörpers ohne Zahnstollen,
Figur 4 und 5 einen Teilschnitt und die Teilansicht des Stollenwälzfräsers nach Fig. 1 vergrößert,
Figur 6 und 7 die Ansicht und Seitenansicht eines Schneidzahnstollens, teilweise aufgeschnitten.

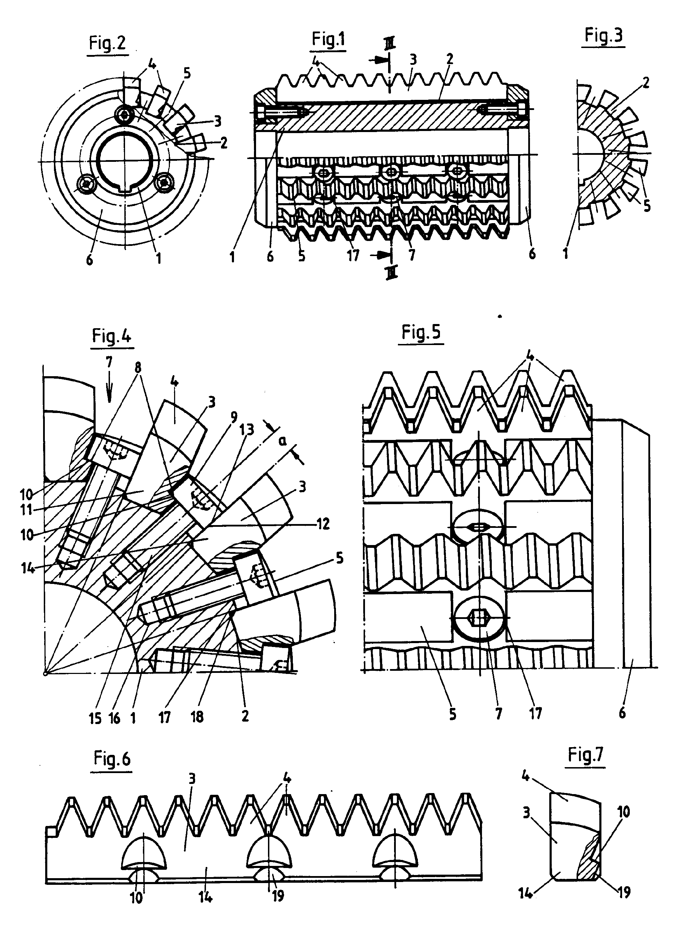

Wie aus der Zeichnung ersichtlich wird, besteht der Stollenwälzfräser aus einem zylindrischen Grundkörper 1 mit Quernuten 2, in welche die kammartigen Schneidzahnstollen 3 eingesetzt sind, deren einzelne Zahnköpfe 4 über dem Grundkörper 1 entsprechend Fig. 1 eine schraubenlinienförmige Anordnung ergeben. Die Schneidzahnstollen 3 sind in den Quernuten 2 über Schraubspannmittel an den Stollenhaltestegen 5 einge-

spannt und beidseits im μ-Bereich überstehend mittels aufgeschraubten Endringen 6 im Grundkörper 1 axial gehalten. Als Spannmittel dienen Imbusschrauben 7, welche beim Anzug einerseits mit einem Sektor des Unterrandes 8 eines Schraubenkopfes 9 auf den Taschenboden 10 im Fußbereich 11 eines Stollens 3 und andererseits mit ihrem Kopfumfang entlang einer Mantellinie 12 zur Frontseite 13 des benachbarten Stollenfußes 14 anliegen. Bei in radialer Richtung angeordneten Stollenfrontseiten 13 sind die Schraubenbolzen 15 jeweils in ein parallel hierzu verlaufendes Sackloch 16 im Grundkörper 1 einschraubbar. Hierbei entspricht der Abstand a zwischen Schraubenachse und Frontseite 13 dem Schraubenkopfradius.

Zur Aufnahme der Schraubenköpfe 9 sind senkrecht zu den Quernuten 2 im Grundkörper 1 bzw. den Stollenhaltestegen 5 Ringnuten 17 eingelassen, welche die Schraubköpfe 9 im Grundkörper versenkt aufnehmen. Die Ringnuten 17 bilden beim Einlauf in der Quernut 2 Absätze 18 und entsprechen damit nicht ganz der Quernuttiefe 2. Die Schneidzahnstollen 3 weisen jeweils im Fußbereich 14 abgerundete Taschen mit Bodenflächen 10, wie bei Fig. 6 und 7 ersichtlich, für die Anlage eines Sektor des entsprechenden Schraubkopfunterrandes 8 auf und darauf folgend schräg eingelassene Rundungen 19 für den Schraubbolzendurchgang 15. Die Taschen mit Bodenflächen 10 und die Schrägen Rundungen 19 sind mit seitlicher Luft für die Schraubköpfe 8 und Schraubbolzen 15 gearbeitet, um hier eine Fehlanlage zu vermeiden.

Die Quernuten 2 stehen senkrecht zur Schneidrichtung, d.h. sie (2) verlaufen in Längsrichtung im Grundkörper 1 und die Ringnuten 17 verlaufen hierzu senkrecht, d.h. in Schneidrichtung.

## Patentansprüche

1. Stollenwälzfräser zur Herstellung von Verzahnungen
   im Abwälzverfahren, mit in Quernuten (2) eines zylindrischen Grundkörpers (1) einsetzbaren, kammartigen Schneidzahnstollen (3), deren einzelne Zahnköpfe (4) über dem Grundkörper eine schraubenlinienförmige Anordnung ergeben, wobei die Schneidzahnstollen in den Quernuten durch Schraubspannmitteln an den Stollenhaltestegen (5) zwischen den Quernuten verspannt und beidseits mittels Endringen (16) im Grundkörper gehalten sind, wobei als Spannmittel Druckschrauben dienen, die gegen im Fußbereich (11) der Zahnstollen eingelassene Taschen zur Verspannung derselben einschraubbar sind,
   **dadurch gekennzeichnet**, daß Imbusschrauben (7) beim Anzug einerseits mit einem Sektor des Unterrandes (8) ihres Schraubkopfes (9) auf dem Taschenboden (10) im Fußbereich eines Stollenrückens und andererseits mit ihrem Kopfumfang entlang einer Mantellinie (12) der Frontseite des benachbarten Stollenfußes anliegen.

2. Stollenwälzfräser nach Anspruch 1,
   **dadurch gekennzeichnet**, daß bei in radialer Richtung angeordneten Stollenfrontseiten die Schraubenbolzen jeweils in ein parallel hierzu verlaufendes Sackloch (16) im Grundkörper einschraubbar sind, wobei der Abstand (a) zwischen Schraubenachse und Frontseite dem Schraubkopfradius entspricht.

3. Stollenwälzfräser nach Anspruch 1 oder 2,
   **dadurch gekennzeichnet**, daß zur Aufnahme der Schraubköpfe senkrecht zu den Quernuten im Grundkörper bzw. den Stollenhaltestegen Ringnuten (17) eingelassen sind, welche die Schraubköpfe im Grundkörper versenken.

4. Stollenwälzfräser nach Anspruch 3,
   **dadurch gekennzeichnet**, daß die Ringnuten beim Einlauf in die Quernuten Absätze (18) bilden und damit nicht ganz der Quernuttiefe entsprechen.

5. Stollenwälzfräser nach einem der vorhergehenden Ansprüche,
   **dadurch gekennzeichnet**, daß die Schneidzahnstollen im Fußbereich abgerundete Taschen mit Bodenflächen jeweils für die Anlage eines Sektors des entsprechenden Schraubkopfunterrands aufweisen und darauf folgend schräg eingelassene Rundungen (19) für den Schraubbolzendurchgang besitzen.

## Claims

1. A toothed hob for gear-hobbing, which comprises comblike cutting tooth bars (3), which are adapted to be inserted into transverse grooves (2) of a cylindrical body (1) and have individual tooth tips (4), which extend along a helix around the body, wherein the cutting tooth bars are clamped in the transverse grooves by clamp screw means against the bar-retaining ribs (5) between the transverse grooves and are held in the body at both ends by end rings (16) and the clamping means consist of pressure-applying screws, which are adapted to be screwed into pockets formed in the root portion (11) of the toothed bars to clamp the latter, characterized in that the socket head cap screws (7) as they are tightened engage at a sector of the bottom edge (8) of their screw head (9) the bottom (10) of a pocket in the root portion of a bar backing and at the periphery of their head engage the front side of the adjacent bar root along a generatrix (12).

2. A toothed hob according to claim 1, characterized in that the front sides of the bars extend in a radial direction, each screw shank is adapted to be screwed into a blind hole (16), which extends parallel thereto and is formed in the body, and the distance (a) between the axis of the screw and the front side corresponds to the radius of the screw head.

3. A toothed hob according to claim 1 or 2, characterized in that annular grooves (17) for receiving the screw heads are formed in the body, particularly in the bar-retaining ribs, and extend at right angles to the transverse grooves and permit the screw heads to be countersunk in the body.

4. A toothed hub according to claim 3, characterized in that the annular grooves open into the transverse grooves at steps (18) so that the annular grooves are slightly smaller in depth than the transverse grooves.

5. A toothed hub according to any of the preceding claims, characterized in that the cutting tooth bars are formed in their root portion with rounded pockets having bottom surfaces for being engaged by a sector of the bottom edge of the head of the corresponding screw and adjacent to said bottom surfaces have inclined rounded surfaces (19), which define spaces for receiving the shank of the screw.

**Revendications**

1. Fraise-mère développante à barrette dentée pour la fabrication de denture par le procédé à développante, comprenant des barrettes de dents coupantes (3) en forme de peigne qui peuvent être engagées dans des rainures transversales (1) d'un corps de base cylindrique (1) et dont les différentes têtes de dents (4) conduisent à une disposition hélicoïdale au-dessus du corps de base, les barrettes de dents coupantes étant bloquées dans les rainures transversales au moyen de serrage à vis sur les nervures de retenue des barrettes (5) entre les rainures transversales et maintenues des deux côtés dans le corps de base au moyen de bagues d'extrémités (16), les moyens de serrage étant constitués par des vis de pression qui peuvent être vissées dans des poches ménagées dans la région du pied (11) des barrettes dentées pour assurer le blocage de celles-ci, **caractérisée en ce que,** lors du serrage, des vis à six pans creux (7) s'appliquent d'une part avec un secteur du bord inférieur (8) de leur tête (9) contre le fond de poche (10), dans la région du pied d'un dos de barrette dentée et, d'autre pari, avec la périphérie de leur tête le long d'une génératrice (12) de la face frontale du pied de barrette voisin.

2. - Fraise-mère développante à barrette dentée selon la revendication 1, caractérisée en ce que, pour des faces frontales des barrettes orientées dans le sens radial, les boulons filetés peuvent être respectivement vissés dans un trou borgne (16) dans le corps de base qui s'étend parallèlement auxdites faces frontales, la distance (a) entre l'axe des boulons et la face frontale correspondant au rayon de la tête de vis.

3. - Fraise-mère développante à barrette dentée selon l'une des revendications 1 ou 2, caractérisée en ce que, pour la réception des têtes de vis, des rainures annulaires (17) sont ménagées perpendiculairement aux rainures transversales dans le corps de base et respectivement dans les nervures de retenue des barrettes pour noyer les têtes de vis dans le corps de base.

4. - Fraise-mère développante à barrette dentée selon la revendication 3, caractérisée en ce que les rainures annulaires forment à l'entrée des rainures transversales des gradins (18) et ne correspondent donc pas tout à fait à la profondeur des rainures transversales.

5. - Fraise-mère développante à barrette dentée selon l'une des revendications précédentes, caractérisée en ce que les barrettes de dents coupantes présentent dans la région du pied des poches arrondies avec des surfaces de fond respectivement destinées à l'application d'un secteur du bord inférieur correspondant de la tête de vis et auxquelles fond suite des arrondis (19) obliques pour le passage des boulons filetés.

Fig.2

Fig.1

Fig.3

Fig.4

Fig.5

Fig.6

Fig.7